Europäisches Patentamt

**European Patent Office** (11) Publication number: **0 249 027**
**B1**
Office européen des brevets

(12) **EUROPEAN PATENT SPECIFICATION**

(45) Date of publication of the patent specification: (51) Int. Cl.⁵: **A01G 9/02**
**14.11.90**

(21) Application number: **87106559.5**

(22) Date of filing: **06.05.87**

(54) **Plant container.**

(30) Priority: **09.05.86 ES 294250 U** (73) Proprietor: **Cabre Roige, Luis, Lauria 147, Barcelona(ES)**

(43) Date of publication of application: (72) Inventor: **Cabre Roige, Luis, Lauria 147, Barcelona(ES)**
**16.12.87 Bulletin 87/51**

(74) Representative: **Kador & Partner, Corneliusstrasse 15, D-8000 München 5(DE)**
(45) Publication of the grant of the patent:
**14.11.90 Bulletin 90/46**

(84) Designated Contracting States:
**DE FR GB IT**

(56) References cited:
**EP-A- 0 150 817**
**FR-A- 2 224 077**
**FR-A- 2 556 928**
**US-A- 2 058 934**

ACTORUM AG

## Description

This invention refers to a jardiniere according to the precharacterizing part of claim 1. It is preferably used though not solely outside as for example on the public highway, in gardens or for the decoration of public open air precincts and the like.

The jardiniere or plant container herein described is of the type consisting of an outer box which serves as a protective container and as a decorative exterior to the jardiniere itself which latter holds the plants, flowers or other forms of vegetation and which is the internal component separable from the outer box, there being, thus, two independent but associated parts.

This particularity enables the exterior, decorative and protective component to have fitted therein a diversity of internal components in succession, each with various plants, or arrangements of plants, or inversely, one component of the internal type may be fitted into successively, a diversity of external components carrying a variety of decorative finishes.

A typical utilization of the jardiniere as described herein would be the floral ornamentation of public footpaths or sidewalks so providing a practical system for maintaining them while they are disposed along the throughfares or in the gardens and spaces open to the public. Instead of being obliged to carry out the maintenance of the plants contained in the jardinieres while they are distributed over a considerable area, in situ, the individual internal components from a number of boxes may be collected by a suitable vehicle, taken to a central site and the plants maintained conveniently. They can then be returned to their respective boxes or external components, which latter will have remained in their permanent position. By this means there is no necessity for the skilled gardeners or specialized personnel to travel to each position where the jardinieres are located which in turn considerable reduces the maintenance costs.

From US-A 2 058 934 a jardiniere according to the precharacterizing parts of claim 1 is known having an internal container with holes in the bottom plate for supplying the soil with water within the space between the bottoms of both containers. However, by this way the soil is either dipped in water so that it becomes too wet and the water vaporises quickly or the moisture supply is interrupted when the level of water falls below the bottom plate of the internal container.

The object of the present invention is, therefore, to provide a jardiniere according to the precharacterizing part of claim 1 which ensures an adequate supply of moisture to the soil in the internal container.

This object is attained by a jardiniere according to claim 1.

The drawings show by way of a non-limitative illustration one embodiment of the improved plant container or jardiniere in accordance with the principles enunciated in the claims.

In the said drawings:

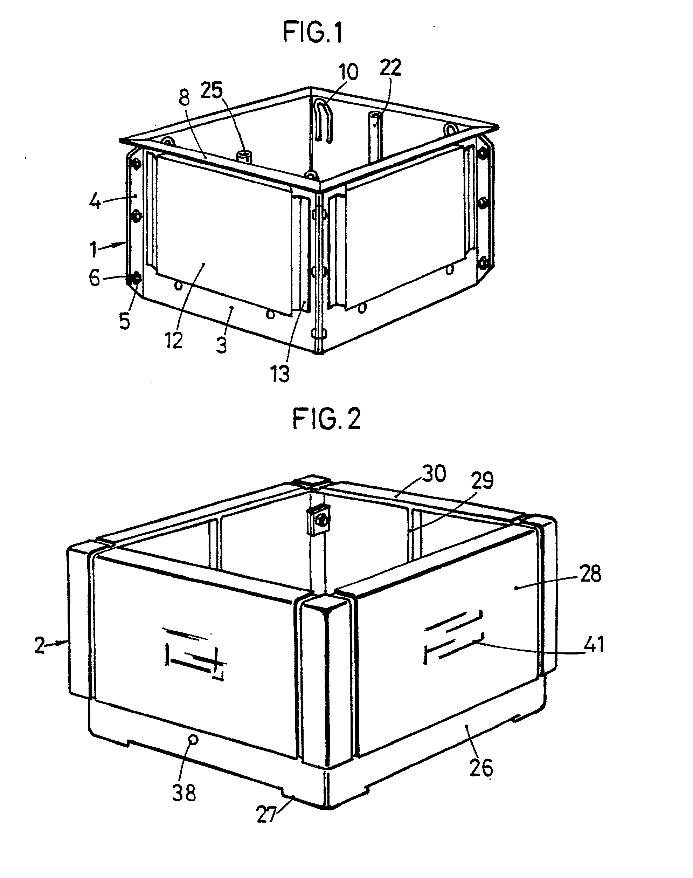

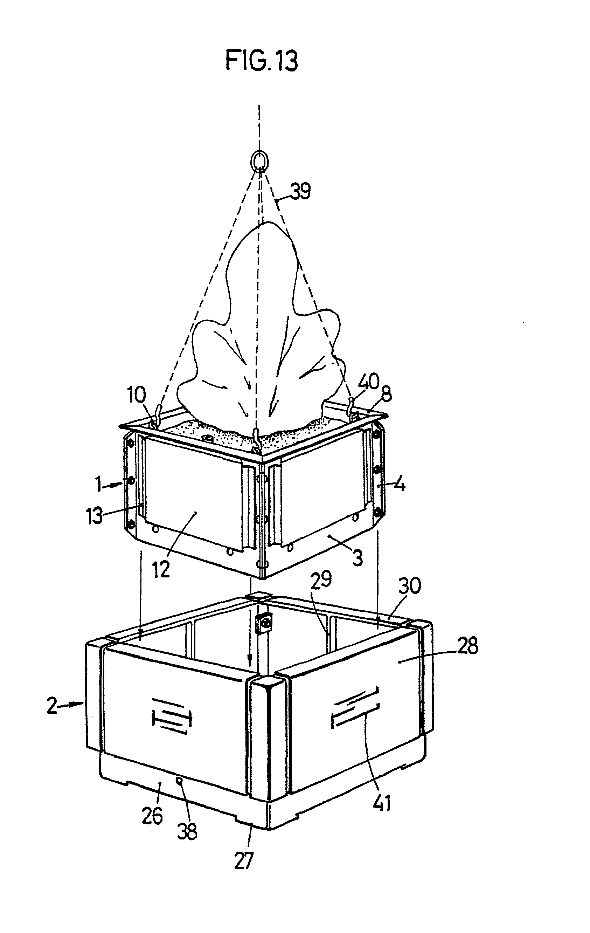

Figure 1 shows the internal container of the jardiniere, this being the functional part of the plant box, containing therein the plant or plant arrangement. Figure 2 shows the external container designed to receive the internal container, forming an assembly as is shown in Figure 13, of the two respective components.

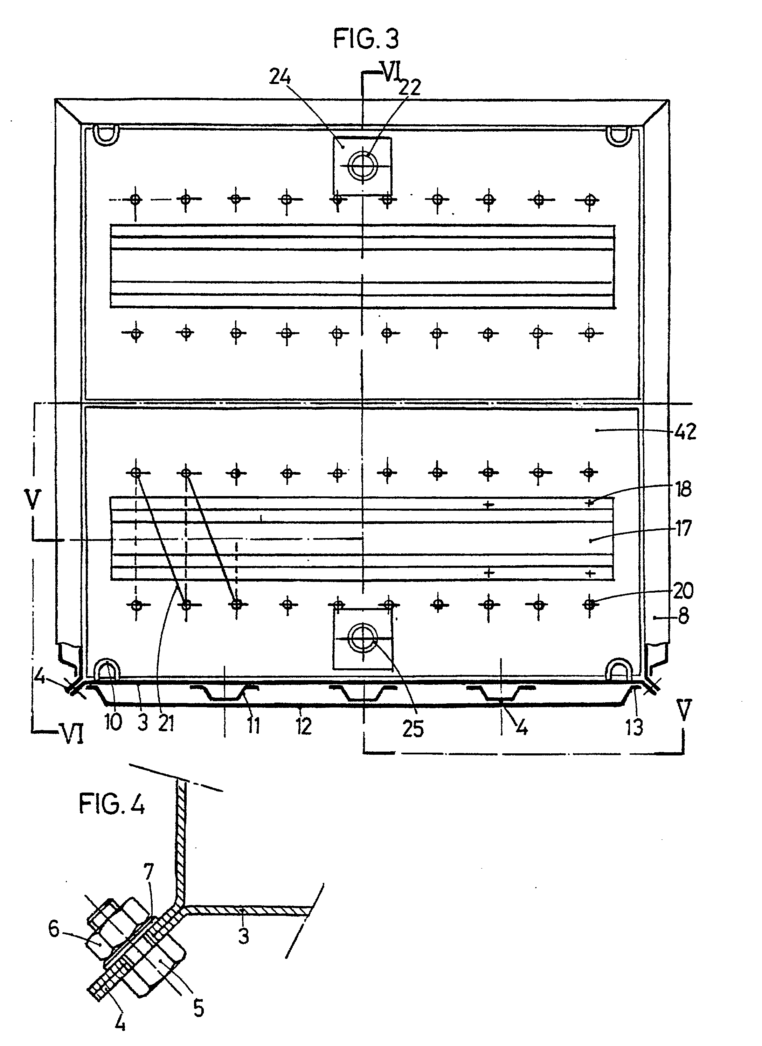

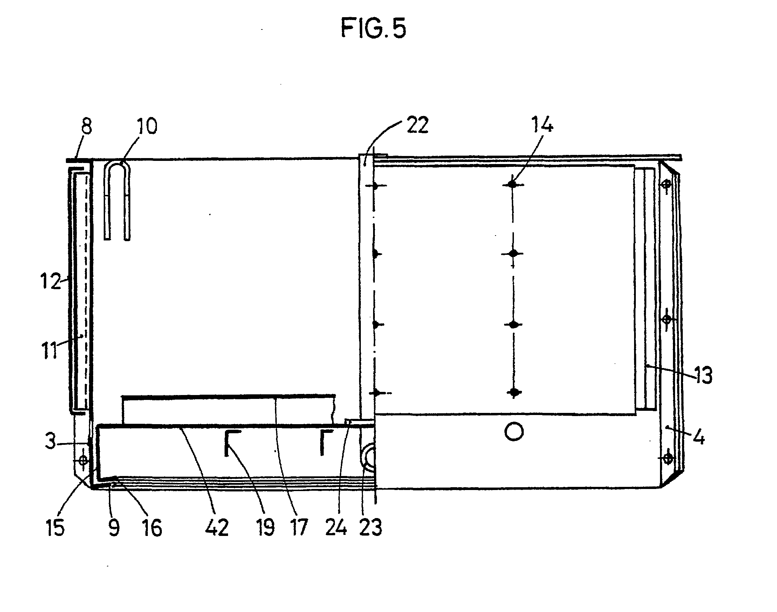

Figure 3 is a plan view in partial section of the internal container shown in Figure 1 while Figure 4 is an enlarged detail showing the vertical corner member of the same container. Figures 5 an 6 are cross sections on vertical planes through the planes indicated as V–V and VI–VI respectively, of the same container,

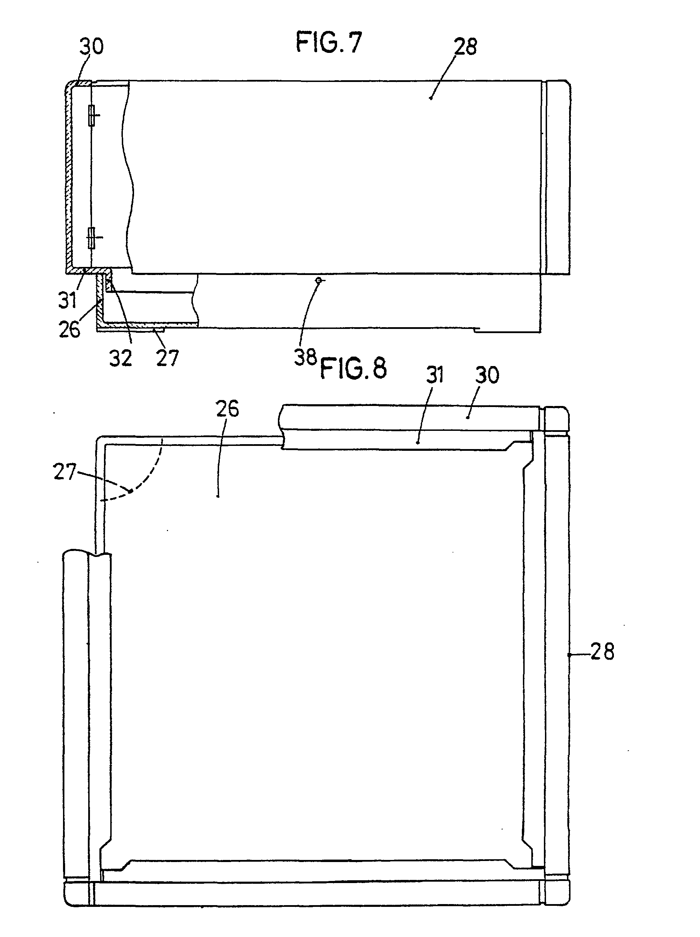

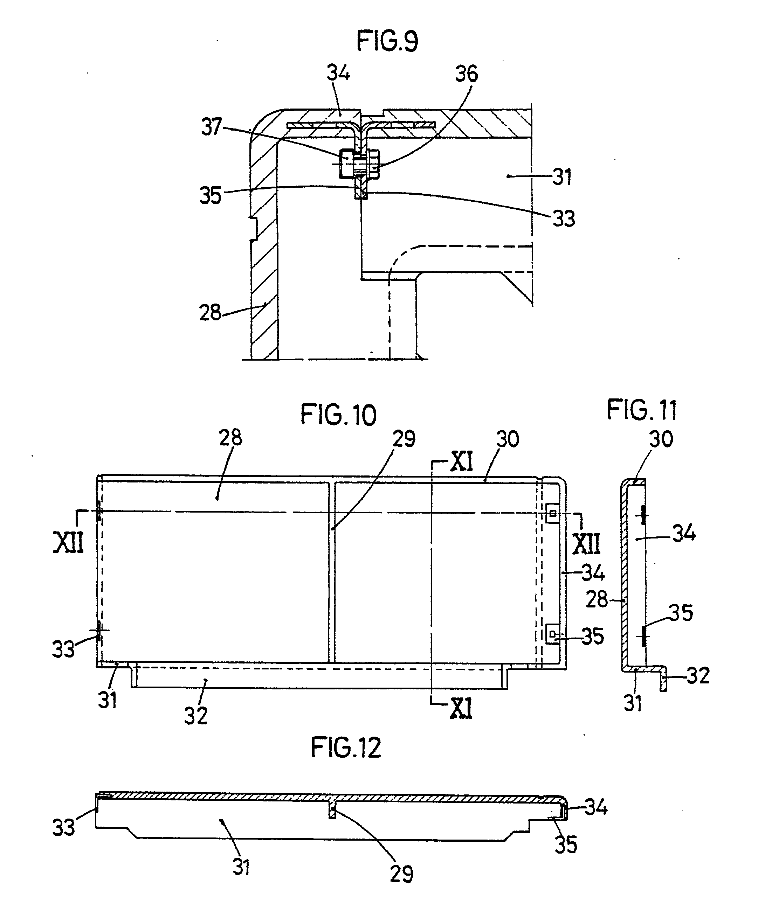

Figures 7 and 8 are side elevation and plan view in partial cross section of the external container jardiniere, the construction being shown in the detail Figure 9, a part plan view and to an enlarged scale.

The construction of the external container may be seen also in Figure 10, 11 and 12 on one vertical and one horizontal section taken through the planes XI–XI and XII–XII respectively.

The numbers in the text below correspond to the references on the drawings.

The plant container or jardiniere as described consists, as indicated above, of an internal container component shown as the body -1- in Figure 1, designed to be fitted within another container body -2- as shown in Figure 2. The former is made up of four metal plates -3- of rectangular shape and mutually alike and joined together by their vertical edges which are formed into elongated trapezoidal flanges -4-drilled for fitting bolts with their corresponding nuts and locking washers, 5, 6 and 7 respectively, thus a square shaped box, open at its top and bottom, with its height less than its width. The top edges of the plates -3- are formed to trapezoidal flanges -8- so that the assembled figure is that of a quadrangular frame. The lower edges of the plates are formed to entrant flanges -9- at a slight angle to the plane of the base as may be seen in the Figure 5.

The plates -3- carry, near to the upper edges, 'U' members inverted for purposes of lifting and transporting the internal component.

The plates -3- have attached thereto on the outer faces trapezoidal section members -11-, welded on their vertical edgescarrying rectangular plates -12- fixed by the edges -13- & spot welds -14- thereto as shown in Figure 3,5 and 6. This assembly provides thus heat insulating cavities of a flattened configuration against the respective lateral walls.

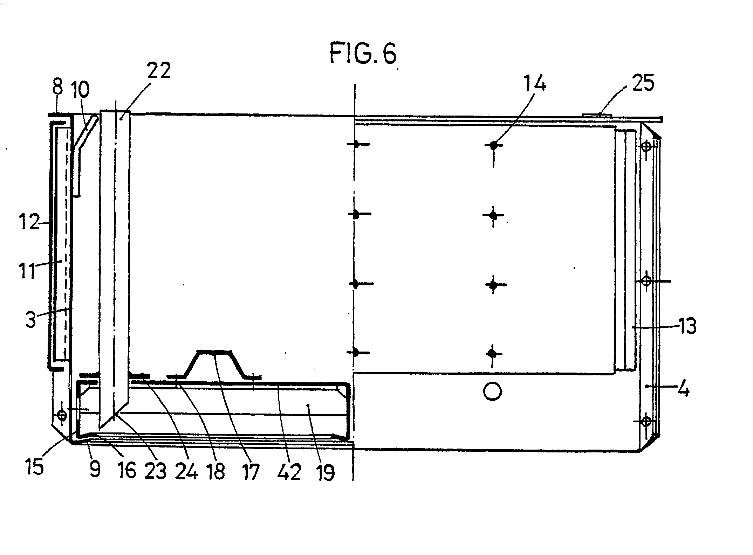

On the bottom of the interior of the component -1- there are fixed flattened boxes -42- having lateral sides -15- of low height having the lower side open and the edge flanges -16- at a slight angle to the horizontal as shown in Figure 5 and 6. These lower chambers have spot welded thereto on their upper faces lengths of trapezoidal section members -17- the welds being on the lateral edges -18-. L section members -19- are fixxed in parallel and at regular intervals across the lower faces of the chambers -42- Holes -20- are provided in the lower chambers -42- for the purpose of holding cording -21- which can take up water by capilliary action and transmit it to the mass of soil situated above the said chambers which form the base of the internal component -1-.

A length of tube -22- is fitted to one of the sides of the component vertically having its lower extremity -23- angled and located in the lower part of one of the flattened chambers -42- penetrating therein through a hole slightly bigger than the tube and held in place by means of a plate -24-, the tube serving as a feed means for water into the interior of the jardiniere.

Another tube -25- is fitted on the side opposite that of -22- in the component -1- for the ventilation of the water chamber and this may be fitted with a floating rod the position of the head of which will indicate the level of the water.

The component -2-, the outer part of the jardiniere as shown in the drawings 2, 7 and 8, 9 to 12, consists of a base -26- in the shape of a flat quadrangular box in plan view of low height compared to its width and having salient configurations -27- acting as support feet in the areas corresponding to the corners. The main body -2-, resting on this base comprises four plates -28-, as shown in the Figures 10, 11.and 12, These four plates are provided with a central strengthening member -29- in the form of a transverse rib on the inner surface, an inward protruding flange on the upper edge -30-, another inward protruding flange -31- at the base and a rim -32- which delimits the open area which rests on the lower box -26- as shown in the Figure 7.

Assembly of the four pieces -28- is effected by means of two salient fitments in the form of metal angles -33- with one of their sides inserted within the material as can be seen in Figure 9. while the other extremity of each plate -28- forming a right angled rim -34- and fitted with another pair of angles -35- corresponding to the first pair, The assembly is then carried out using bolts -36- through holes in the said fitments with their corresponding locking nuts -37-.

The component -2- comprises, in the form described above, the upper part consisting of the four plates -28-, resting on and fitting into the the box form base -26-, the latter providing a chamber containing a quantity of water in reserve for irrigating the plants in the mass of soil contained in the component -1- which is located within the component -2-. The said chamber remains in communication with the surrounding air by means of holes in the lower part of of the plates -3-, thus providing aereation of the water in the chamber

To avoid an excess of water to the lower chamber of the jardiniere the lower chamber -26- has an overflow orifice -38- in the central part of its side walls, the height thereof determining the maximum normally required level of water such that when this is exceeded the excess will spill out to the exterior.

Figure 13 illustrates the procedure for assembling and separating the two components 1 and 2. The internal component -1- may be moved, extracted from or placed in the component -2- by means of a lifting mechanism such as a hoist and cables -39- fitted with hooks -40- which engage with the 'U' hooks -10- attached to the component -1-. Thus by using a truck fitted with suitable lifting mechanism acting as a crane, a number of internal containers -1- belonging to a multiplicity of jardinieres can be loaded and unloaded leaving their respective outer boxes in their permanent outside places where they continue to retaing their ornamental function.

The outer surfaces of the sides -28- of component -2- may carry inscriptions or designs -41- corresponding for example to the Municipality, Public Authority or a mere artistic decoration.

**Claims**

1. A jardiniere comprising two containers (1, 2) each being in the form of a box with its upper side open, one (2) of them being the external container and of greater dimensions and, the other, the internal container (1) being designed to be fitted within the external container (2) and having as its function to hold a mass of soil sustaining plants under cultivation, the internal container (1) being removable with respect to the external container (2) and being provided with means (10) of extraction from and introduction into the external container (2), there being between the two containers (1, 2) a space in the form of a chamber for a reserve of water for the purpose of humidifying the soil sustaining the plants, characterized in that the lower entrant edges (9) of the side walls (3) of the internal container (1) support a pair of flattened orthohedric boxes (42) which form in turn a supporting base for the mass of soil and on their top side are provided with longitudinal section members (17) by the side of which are successions of holes (20) which hold lengths of cord (21) which by capilliary action transmit moisture from the lower water chamber to the mass of the soil.

2. The jardiniere of claim 1 characterized in that the external container (2) consists of an orthohedric shaped body of a height less than the width with open top and bottom, the base having a salient form which can be inserted into the opening of a second box shaped body (26) the latter acting as a supporting base on a horizontal surface and being also a chamber for a reserve of water with a centrally located overflow (38) and being in communication with the surrounding air through vent orifices provided in the lower part of the walls of the internal container (1).

3. The jardiniere of claim 1 or 2 characterized in that each of the walls of the exterior container (2) consists of a plate (28) having entrant flanges (30, 31) on its longer sides, one being lesser than the other, defining thereby part of the upper rim of the body of the resulting jardiniere and of the part that is inserted in the lower base section (26) respectively and there being derivations from each of the shorter sides of the wall sections (28) in the form of a pair of metal angle pieces inserted in the mass of the wall plate material and designed to serve as coupling members between adjacent wall plates by means of bolts (36) and lock nuts (37).

## Patentansprüche

1. Pflanzkasten, der zwei Behälter (1, 2) umfaßt, die jeweils in Form eines Kastens mit offener Oberseite sind, wobei einer davon (2) der äußere Behälter und mit größeren Abmessungen ist und der andere, der innere Behälter (1) so gestaltet ist, daß er in den äußeren Behälter (2) paßt und die Funktion des Haltens einer Humusmasse zur Ernährung von Pflanzen bei Kultivierung aufweist, wobei der innere Behälter (1) im Verhältnis zum äußeren Behälter (2) herausnehmbar ist und mit einer Einrichtung (10) zum Herausziehen aus und zum Einführen in den äußeren Behälter (2) versehen ist, wobei zwischen den beiden Behältern (1,2) ein Raum in Form einer Kammer für eine Wasserreserve mit dem Zweck vorliegt, den die Pflanzen ernährenden Humus zu befeuchten, dadurch gekennzeichnet, daß die unteren Eintrittskanten (9) der Seitenwände (3) des inneren Behälters (1) ein Paar abgeflachter geradflächiger (orthohedric) Kästen (42) tragen, die wiederum einen Stützsockel für die Humusmasse bilden, und auf ihrer Oberseite mit Längsteilen (17) versehen sind, an deren Seite eine Reihe von Löchern (20) ist, die Längen einer Schnur (21) halten, die die Feuchtigkeit von der unteren Wasserkammer durch Kapillarwirkung zur Humusmasse überträgt.

2. Pflanzkasten nach Anspruch 1, dadurch gekennzeichnet, daß der äußere Behälter (2) aus einem geradflächig geformten Körper mit einer Höhe, die kleiner als die Breite ist, mit offener Oberseite und Unterseite besteht, wobei das Grundteil eine herausragende Form aufweist, die in die Öffnung des zweiten kastenförmigen Körpers (26) eingesetzt werden kann, wobei der letztere auf die horizontale Oberfläche als Stützsockel wirkt und ebenfalls eine Kammer für eine Wasserreserve mit einem zentral angeordneten Überlauf (38) ist und durch Belüftungsöffnungen, die im unteren Teil der Wände des inneren Behälters (1) vorgesehen sind, mit der Umgebungsluft in Verbindung steht.

3. Pflanzkasten nach Anspruch 1 oder 2, dadurch gekennzeichnet, daß jede der Wände des äußeren Behälters (2) aus einer Platte (28) mit Eintrittsflanschen (30, 31) auf ihren längeren Seiten besteht, wobei einer kleiner als der andere ist, die dadurch einen Teil des oberen Randes des Körpers des resultierenden Pflanzkastens bzw. des Teils bilden, der in den unteren Grundabschnitt (26) eingesetzt wird, und aus jeder der kürzeren Seiten der Bandabschnitte (28) Ableitungen in Form eines Paares von Metallwinkelstücken vorliegen, die in die Masse des Wandplattenmaterials eingesetzt und so gestaltet sind, daß sie durch Schrauben (36) und Kontermuttern (37) als Verbindungsteile zwischen den benachbarten Wandplatten dienen.

## Revendications

1. Conteneur de plantes comprenant deux récipients (1,2), chacun étant en forme de boîte avec son côté supérieur ouvert, l'un (2) d'eux étant le récipient externe et de plus grandes dimensions et, l'autre, le récipient interne (1) étant agencé pour s'adapter à l'intérieur du récipient externe (2) et ayant pour fonction de maintenir une masse de sol pour nourrir des plantes soumises à culture; le récipient interne (1) étant amovible par rapport au récipient externe (2) et étant agencé avec des moyens (10) d'extraction et d'introduction dans le récipient externe (2), un espace entre les deux récipients (1,2) en forme de chambre pour réserve d'eau dans le but d'humidifier le sol nourrissant les plantes, étant prévu entre les deux récipients, caractérisé en ce que les côtés inférieurs entrants (9) des parois latérales (3) du récipient interne (1) supportent une paire de boîtes aplaties orthoédriques qui forment à leurs tours une base de support pour la masse de sol et sur leur côté supérieur sont prévus des membres de section longitudinaux (17) à côté desquels se situent une succession de trous (20) qui maintiennent des longueurs de cordes (21) qui par capillarité transmettent l'humidité de la chambre à eau inférieure à la masse du sol.

2. Conteneur de plantes selon la revendication 1 caractérisé en ce que le récipient externe (2) consiste en un corps de forme d'orthoédrique d'une hauteur inférieure à la largeur, avec un dessus ouvert et un fond, la base ayant une forme en saillie qui peut être insérée dans l'ouverture d'un second corps (26) en forme de boîte, celui-ci agissant comme une base de support sur une surface horizontale et étant également une chambre de réserve d'eau avec un trop plein (38) situé de façon centrale et étant en communication avec l'air environnant par l'intermédiaire d'orifices de ventilation prévus dans la partie inférieure des parois du récipient interne (1).

3. Conteneur de plantes selon la revendication 1 ou 2 caractérisé en ce que chacune des parois du récipient extérieur (2) consiste en une plaque (28) ayant des bords entrants (30, 31) sur ses côtés les plus longs, l'un étant moins long que l'autre, définissant ainsi une partie du bord supérieur du corps du conteneur de plantes en résultant et de la partie qui est insérée dans la section de base plus basse (26) respectivement et ayant à cet endroit des dérivations à partir de chacun des côtés plus petits des sections de parois (28) en forme d'une paire de pièces métalliques d'angle insérées dans la masse du matériau de la plaque de paroi et agencées pour servir de membre de couplage entre les plaques de parois adjacentes au moyen de vis (36) et d'écrous de verrouillage (37).

## FIG.1

## FIG.2

EP 0 249 027 B1

FIG. 3

FIG. 4

# FIG.5

FIG.6

FIG.7

FIG.8

FIG.9

FIG.10

FIG.11

FIG.12

# FIG.13